# EUROPÄISCHE PATENTSCHRIFT

(11) **EP 3 104 164 B1**
(45) Veröffentlichungstag und Bekanntmachung des Hinweises auf die Patenterteilung: **02.06.2021**
(21) Anmeldenummer: 16172982.7
(22) Anmeldetag: 03.06.2016
(51) Int. Cl.: G01N 21/3563, G01N 21/359, G01N 21/95

(54) **MESSSYSTEM ZUR QUALITÄTSÜBERWACHUNG VON TABLETTEN**
MEASURING SYSTEM FOR MONITORING THE QUALITY OF TABLETS
SYSTEME DE MESURE DESTINE A LA SURVEILLANCE DE LA QUALITE DE TABLETTES

(30) Priorität: 11.06.2015 DE 102015109263
(43) Veröffentlichungstag der Anmeldung: 14.12.2016
(73) Patentinhaber: Kraemer, Thilo, 64291 Darmstadt (DE)
(72) Erfinder: KRAEMER, Thilo, 64291 Darmstadt (DE); ELSNER, Claus, 63768 Hösbach (DE)
(74) Vertreter: Hamel, Armin

(56) Entgegenhaltungen:
- WO-A1-2009/137855
- DE-A1-102005 010 216
- US-A- 4 734 584
- US-A1- 2003 098 969
- US-A1- 2013 256 534
- US-B2- 6 667 808

## Beschreibung

Die Erfindung betrifft ein Messsystem zur Qualitätsüberwachung von Prüflingen, umfassend mindestens eine lichtdurchlässige Aufnahmevorrichtung für die Aufnahme von zumindest einem Prüfling, mindestens einer NIR-Strahlungsquelle sowie mindestens einen Detektor für Transmission und/oder Reflexion, wobei eine erste Messoptik vorgesehen ist, mit der die von einem Prüfling durchgelassene NIR-Strahlung aufnehmbar und an den mindestens einen Detektor weiterleitbar ist und eine zweite Messoptik vorgesehen ist, mit der die von einem Prüfling reflektierte NIR-Strahlung aufnehmbar und an den mindestens einen Detektor weiterleitbar ist.

Aus JP 2002-055053 A ist eine Vorrichtung bekannt, die ein Messsystem umfasst, mit der die Qualität von Tabletten geprüft werden kann. Das Messsystem weist eine Infrarot-Strahlungsquelle sowie einen Detektor zum Erfassen der von der Infrarot-Strahlungsquelle abgegebenen Infrarot-Strahlung auf. Während die Tabletten durch dieses Messsystem geführt werden, trifft die Infrarot-Strahlung auf die Tabletten. Die Infrarot-Strahlung wird dabei von den Tabletten reflektiert und die reflektierte Strahlung von dem Detektor erfasst. Über die reflektierte Strahlung wird mittels eines Rechners die Qualität der Tabletten bestimmt.

Weiterhin beschreibt WO 2009/137855 A1 ein Verfahren zur Bestimmung der physikalisch-chemischen Eigenschaften von Feststoffen wie Tabletten, Pulvern oder granulierten Materialien. Gemäß diesem Verfahren wird ein Feststoff einer Nahinfrarotspektroskopie unterzogen, bei der mindestens zwei Charakterisierungsmerkmale des Feststoffs bestimmt werden. Die Charakterisierungsmerkmale können chemische und physikalische Charakterisierungsmerkmale sein, wobei die physikalischen Charakterisierungsmerkmale Partikelgröße, spezifische Oberfläche und Porosität sein können.

Aus US 6 667 808 B2 ist ein multifunktionales Infrarotspektrometersysten gemäß dem Oberbegriff des Anspruchs 1 bekannt. Dieses System weist ein Interferometer auf, das Infrarotstrahlen einer Quelle empfängt und einen modulierten Ausgangsstrahl auf Strahlengängen zu mehreren räumlich getrennten Infrarotdetektoren liefert. Ein an einer Verbindungsposition montiertes Spiegelelement empfängt den Strahl auf einem Hauptstrahlengang und lenkt diesen auf Verzweigungsstrahlengängen zu Abtastpositionen, wobei der Strahl dann auf dem Verzweigungsstrahlengang zu einem der Detektoren gerichtet wird. Das Mehrfachpositionsspiegelelement kann auch indiziert werden, um den Strahl auf einem Abzweigpfad zu einem Glasfaserkabel zu lenken, an dessen Ende sich eine Sonde befindet, die mit dem reflektierten Licht in eine zu analysierende Probenflüssigkeit oder ein zu analysierendes Pulver eingeführt werden kann.

Aus US 2003/098969 A1 ist ein NIR-Spektroskopie-Flüssigkeitsanalysesystem bekannt, das eine Reihe von LEDs mit jeweils einer eigenen vorgewählten Mittenwellenlänge als Beleuchtungsquelle verwendet. Diese Wellenlängen haben überlappende spektrale Breiten, so dass die Messung ein breites Spektrum abdeckt. Die LEDs beleuchten die Flüssigkeitsprobe nacheinander, wobei das Transmissionsabsorptionsvermögen durch die Probe und das Reflexionsvermögen oder die Streuung von der Probe für den Wellenlängenbereich jeder LED gemessen werden. Die Messungen werden mit Fotodetektoren durchgeführt.

US 4 734 584 A betrifft ein quantitatives Messgerät im NIR-Bereich. Das Messgerät ermöglicht die Messung entweder im Reflexions- oder im Transmissionsmodus, abhängig von einem Probenhalter, der in eine Probenkammer gehalten wird. Das Messgerät verfügt über Mittel zum Erfassen sowohl im Reflexionsmodus als auch im Transmissionsmodus, wobei der verwendete Probenhalter bestimmt, in welchem Modus die Messung durchgeführt wird.

Zudem ist aus US 2013/256534 A1 eine Vorrichtung und ein Verfahren zum Identifizieren von festen und pulverförmigen Materialien bekannt. Dabei wird Nahinfrarot-Reflexionsspektroskopie mit multivariaten Kalibrierungsverfahren zur Analyse der Spektraldaten kombiniert. Nahinfrarot-Reflexionsspektroskopie wird entweder im Wellenlängenbereich von 700 bis 1100 nm oder 900 bis 1700 nm eingesetzt, um feste oder pulverförmige Materialien zu identifizieren und zu bestimmen, inwieweit sie mit bestimmten bekannten Materialien übereinstimmen.

Schließlich ist aus DE 10 2005 010 216 A1 eine spektroskopische Anordnung bekannt, bestehend aus mindestens einer Lichtquelle für FBG Fasern und NIR-Messzelle, mindestens einem optischen Multiplexer zur Aufschaltung der Messstrecken auf das Spektrometer, mindestens einer FBG-Faser und mindestens einer Glasfaser für die NIR-Spektroskopie, einem Interferometer, einem Detektor und einer Signalauswertung/Steuerung, zur apparativen Kombination der Nah-Infrarot-Spektroskopie zur stofflichen Konzentrationsbestimmung mit der Spektroskopie an Glasfasern bestückt mit Faser-Bragg-Gittern zur Temperatur- bzw. Temperaturprofilmessung, wobei das Interferometer eines Fourier-Transform-Spektrometers zwischen dem Ausgang der Messstrecken und dem Detektor angeordnet ist.

Aufgabe der vorliegenden Erfindung ist es, ein Messsystem zur Qualitätsüberwachung von Prüflingen bereitzustellen, mit der die Qualität von Prüflingen noch exakter bestimmt werden kann.

[A01] Diese Aufgabe wird durch ein Messsystem zur Qualitätsüberwachung von Tabletten gemäß Anspruch 1 gelöst, das mindestens eine lichtdurchlässige Aufnahmevorrichtung für die Aufnahme von zumindest einem Prüfling, mindestens einer NIR-Strahlungsquelle (NIR = nahes Infrarot) sowie mindestens einen Detektor für Transmission und für Reflexion enthält.

Das Messsystem weist zudem eine erste Messoptik, mit der die von einem Prüfling durchgelassene NIR-Strahlung aufnehmbar und an den mindestens einen Detektor weiterleitbar ist, und eine zweite Messoptik auf, mit der die von einem Prüfling reflektierte NIR-Strahlung aufnehmbar und an den mindestens einen Detektor weiterleitbar ist. Bevorzugt ist die erste Messoptik bzw. die zweite Messoptik sehr nah an dem Prüfling, der vermessen werden soll, angebracht, um zu verhindern, dass zum Beispiel aufgrund von Streuverlusten Messwerte von schlechter Qualität erhalten werden. Es versteht sich, dass mit dem Messsystem nicht nur die Qualität von Prüflingen, sondern auch die in den Prüflingen enthaltenen Wirkstoffe sowie deren Gehalt bestimmt werden kann. Das Messsystem ist vorzugsweise ein Teil eines Prüfsystems für Prüflinge, zum Beispiel eines Systems zur Gewichts- und/oder Durchmesser- und/oder Härtemessung von Prüflingen. Die verwendete NIR-Strahlung weist eine Wellenlänge von 760 bis 2.500 nm bzw. eine Frequenz von 12.500 bis 4.000 cm⁻¹ auf.

Die lichtdurchlässige Aufnahmevorrichtung besteht aus einem Material, das für die NIR-Strahlung durchlässig ist und keinen Einfluss auf die Messwerte für die Reflexion und für die Transmission hat. Die Prüflinge werden mittels der NIR-Strahlungsquelle bestrahlt, wobei sowohl die Transmission und auch die Reflexion ermittelt werden. In einem Rechner, zum Beispiel einem PC oder einem Embedded System, wird über die ermittelten Werte für die Transmission und für die Reflexion, die Qualität der Prüflinge sowie die in den Prüflingen enthaltenen Wirkstoffe bestimmt. Die Qualität sowie der Wirkstoffgehalt können zum Beispiel mittels Chemometrik bestimmt werden. Da sowohl Werte für die Reflexion als auch für die Transmission erhalten werden, kann die Qualität der Prüflinge sowie die in den Prüflingen enthaltenen Wirkstoffe sehr genau bestimmt werden. Ein weiterer Vorteil besteht darin, dass ein Prüfling mittels eines Scanning-Verfahrens auch an mehreren Punkten vermessen werden kann. Durch diese so genannte Mehrfachpunktmessung werden mehrere Messwerte für die Reflexion und für die Transmission eines Prüflings erhalten, wodurch über die ermittelten Einzelwerte und die Bildung von Mittelwerten, stabile Messwerte erhalten werden, die ein optimales Trendmodell bzw. Spektrenmodell gewährleisten. Vorteilhaft ist zudem, dass das Messsystem sehr kompakt aufgebaut ist und vorteilhafterweise auch Teil des Prüfsystems ist. Vorteilhaft ist ferner, dass es sich um eine schnelle Messtechnik handelt, wobei Fremdlicht und Streustrahlung beispielsweise dadurch ausgeschlossen werden können, indem das Messsystem in einem Gehäuse untergebracht ist. Das Messsystem läuft zudem sehr stabil, da wenige mechanische Komponenten benötigt werden. Vorteilhaft ist auch, dass fast alle Tablettenformen und Tablettendicken vermessen werden können. Des Weiteren ist bei diesem Messsystem vorteilhaft, dass durch die Mehrfachpunktmessung nicht nur die Wirkstoffe, sondern auch die Konzentration der Wirkstoffe in einem bestimmten Bereich der Prüflinge bestimmt werden können. Es kann daher eine Aussage darübergemacht werden, wie die Wirkstoffverteilung in den Prüflingen ist.

In anderen Beispielen, die nicht Bestandteil der vorliegenden Erfindung sind, enthält das Messsystem zwei Detektoren, nämlich einen ersten Detektor und einen zweiten Detektor, wobei der erste Detektor mit der ersten Messoptik und der zweite Detektor mit der zweiten Messoptik verbunden sind. Durch diese sehr kompakte Anordnung können die Transmission sowie die Reflexion der Prüflinge sehr exakt und schnell bestimmt werden.

[A03] In einer bevorzugten Ausführungsform sind die erste Messoptik sowie die zweite Messoptik Lichtfasern. Solche optischen Fasern sind recht preiswert, sehr robust und deshalb wenig störanfällig. Es ist aber auch denkbar, dass es sich bei der Messoptik um ein optisches, festes System handelt.

In anderen Beispielen, die nicht Bestandteil der vorliegenden Erfindung sind, sind die erste Messoptik sowie die zweite Messoptik relativ zu der lichtdurchlässigen Aufnahmevorrichtung bewegbar in dem Messsystem angeordnet. Vorzugsweise kann diese Relativbewegung von der ersten Messoptik sowie der zweiten Messoptik zu der Aufnahmevorrichtung entlang aller Achsen, d.h. x-, y- und z-Achse, erfolgen, womit jede Stelle der Oberfläche des Prüflings abgefahren und vermessen werden kann. Dazu können Mittel, zum Beispiel ein 2/3 Schienensystem, vorgesehen sein, mit denen die Aufnahmevorrichtung und/oder die Messoptiken relativ zueinander verfahrbar sind.

Gemäß der vorliegenden Erfindung ist ein Multiplexer vorgesehen, der mit der ersten Messoptik sowie der zweiten Messoptik verbunden ist und zwischen den beiden Messoptiken und dem Detektor angeordnet ist. Vorteilhaft bei dieser Ausführungsform ist, dass nur ein Detektor sowie nur eine NIR-Strahlungsquelle erforderlich sind, wodurch das Messsystem sehr robust aufgebaut ist.

[A06] In einer anderen bevorzugten Ausführungsform ist in dem Messsystem eine zweite NIR-Strahlungsquelle vorgesehen, wobei die zweite NIR-Strahlungsquelle zusammen mit der zweiten Messoptik auf einer Seite der lichtdurchlässigen Aufnahmevorrichtung angeordnet sind und wobei die lichtdurchlässige Aufnahmevorrichtung zwischen der ersten NIR-Strahlungsquelle und der ersten Messoptik angeordnet ist. Durch diese Anordnung können sehr stabile Messwerte erhalten werden.

[A07] Bevorzugt besteht die lichtdurchlässige Aufnahmevorrichtung aus Quarzglas oder Saphir, weil diese Materialien die NIR-Messungen nicht beeinflussen. Besonders bevorzugt ist die lichtdurchlässige Aufnahmevorrichtung eine Quarzglasplatte, auf der die zu vermessenden Prüflinge angeordnet sind.

Beispiele werden in den Figuren gezeigt und im Folgenden näher erläutert. Es zeigen:
- Figuren 1: eine schematische Ansicht einer Anordnung umfassend eine erste Variante eines Messsystems zur Qualitätsüberwachung von Prüflingen sowie ein Prüfsystem;
- Figuren 2A bis 2B: eine schematische Darstellung des in Figur 1 gezeigten Messsystems;
- Figur 3A bis 3D: eine erste Variante eines Messsystems zur Qualitätsüberwachung von Prüflingen;
- Figur 4: eine zweite Variante eines Messsystems zur Qualitätsüberwachung von Prüflingen;
- Figur 5: eine dritte Variante eines Messsystems zur Qualitätsüberwachung von Prüflingen und
- Figur 6: eine vierte Variante eines Messsystems zur Qualitätsüberwachung von Prüflingen.

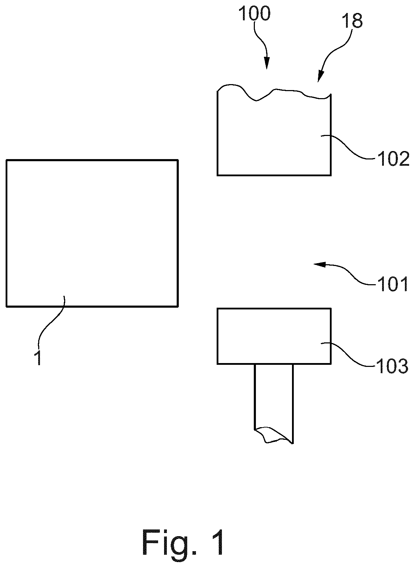

In Figur 1 ist eine schematische Ansicht eines Prüfgeräts 100 für Prüflinge gezeigt, dass ein Messsystem 1 zur Qualitätsüberwachung von Prüflingen, insbesondere Tabletten unterschiedlicher Formen und Größen, sowie Prüfsystem 18 enthält. Bei dem Prüfsystem 18 kann es sich zum Beispiel um eine Tablettenkammer, eine Vorrichtung zur Gewichts- und/oder Durchmesser- und/oder Härtemessung von Prüflingen handeln. In Figur 1 ist beispielhaft für ein solches Prüfsystem 18 eine Vorrichtung zur Gewichts- und/oder Durchmesser- und/oder Härtemessung von Prüflingen dargestellt. Das Prüfgerät 18 weist in Figur 1 beispielhaft eine Bruchkammer 101 auf, die eine Festbacke 102 sowie eine gegebenenfalls ihr gegenüberliegende und bewegliche Pressbacke 103 oder einen Bahnenrand enthält. In dieser Bruchkammer 101 wird mittels eines Bruchtests die Härte der Prüflinge bestimmt. Zudem können in dieser Bruchkammer 101 das Gewicht sowie der Durchmesser der Prüflinge bestimmt werden. Da der Aufbau einer solchen Bruchkammer 101 bekannt ist, wird auf eine detaillierte Beschreibung dieser Bruchkammer 101 verzichtet. Das Messsystem 1 ist der Bruchkammer 101 vorgelagert, so dass die Prüflinge zuerst das Messsystem 1 passieren müssen, bevor sie in die Bruchkammer 101 geführt werden. Ein Prüfling kann dabei mittels eines Transportsystems (nicht gezeigt), zum Beispiel mittels eines Transportsterns, zuerst in das Messsystem 1 und anschließend in die Bruchkammer 101 geführt werden. Es wird also zuerst die Qualität des Prüflings bestimmt, bevor der Bruchtest durchgeführt wird. Zwischen dem Messsystem 1 und der Bruchkammer 101 ist vorzugsweise eine in Figur 1 nicht gezeigte Vereinzelungsvorrichtung vorgesehen. Mit der Vereinzelungsvorrichtung wird einer der in dem Messsystem 1 befindlichen Prüflinge erfasst und in die Bruchkammer 101 geführt. Mit der Vereinzelungsvorrichtung wird somit gewährleistet, dass immer nur ein Prüfling in die Bruchkammer 101 transportiert wird.

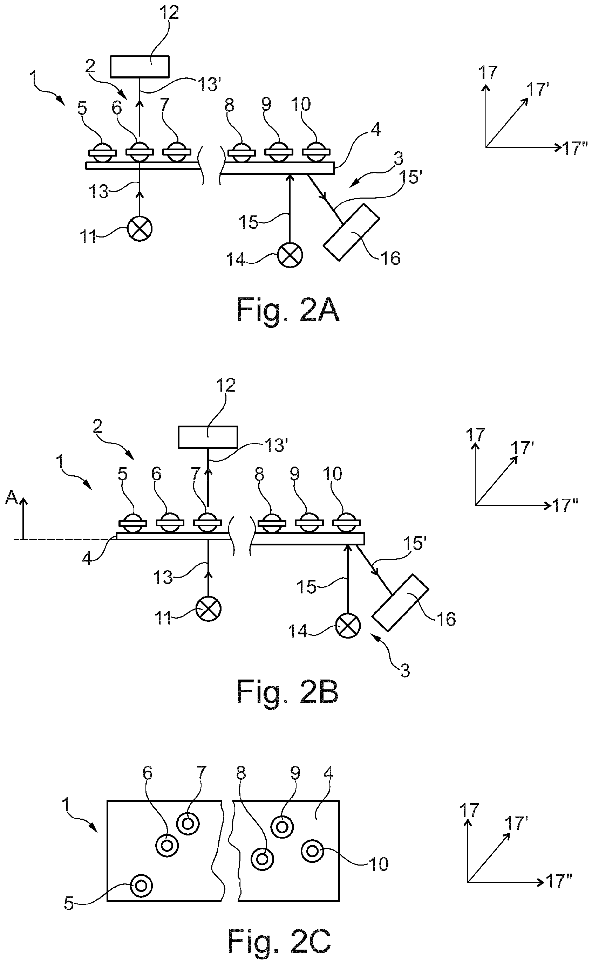

In den Figuren 2A bis 2C ist eine detaillierte Darstellung des in Figur 1 gezeigten Messsystems 1 zur Qualitätsüberwachung sowie zur Wirkstoffbestimmung von Prüflingen gezeigt. Die anderen Elemente des Prüfgeräts 100 sind der Übersicht halber nicht dargestellt.
Das Messsystem 1 in Figur 2A enthält zwei nebeneinander angeordnete Messstationen 2 und 3. Mit diesem Messsystem 1 wird die Qualität der Prüflinge überwacht, die auf einer lichtdurchlässigen Aufnahmevorrichtung 4 angeordnet sind. Auch können die in den Prüflingen enthaltenen Wirkstoffe sowie deren Konzentration bestimmt werden. In Figur 2A sind auf dieser Aufnahmevorrichtung 4 sechs Prüflinge 5 bis 10 zu sehen. Diese lichtdurchlässige Aufnahmevorrichtung 4 besteht aus einem Material, das für die NIR-Strahlung durchlässig ist, wodurch die Messwerte für die Reflexion und auch für die Transmission nicht beeinflusst werden. Vorzugsweise besteht die Aufnahmevorrichtung aus Quarzglas, Infrasil®, Suprasil® oder Saphir. Bei dem Messsystem 1 kann die Aufnahmevorrichtung 4 auch aus mehreren Abschnitten bestehen. So könnte diese Aufnahmevorrichtung 4 zum Beispiel aus zwei nebeneinander angeordneten Aufnahmevorrichtungen für Prüflinge bestehen.
Mit der ersten Messstation 2 kann die Transmission von Prüflingen gemessen werden. Diese erste Messstation 2 weist dazu eine erste NIR-Strahlungsquelle 11 (NIR = nahes Infrarot) sowie einen ersten Detektor 12 für die Transmission, d.h. die Lichtdurchlässigkeit eines Prüflings, auf. In Figur 2A wird dabei gerade die Transmission des Prüflings 6 gemessen, der auf der Aufnahmevorrichtung 4 liegt. Diese Aufnahmevorrichtung 4 ist zwischen dem ersten Detektor 12 und der NIR-Strahlungsquelle 11 angeordnet. Dabei gibt die NIR-Strahlungsquelle 11 NIR-Strahlung 13 ab, die zumindest teilweise von dem Prüfling 6 durchgelassen wird. Die Strahlung, die den Prüfling 6 passiert, wird von einer ersten Messoptik 13' aufgenommen und an den ersten Detektor 12 weitergeleitet. Mit der zweiten Messstation 3 wird gerade die Reflexion des Prüflings 9 gemessen. Dazu imitiert eine zweite NIR-Strahlungsquelle 14 eine NIR-Strahlung 15, die auf den Prüfling 9 trifft und von diesem zumindest teilweise reflektiert wird. Die reflektierte Strahlung wird von einer zweiten Messoptik 15' an den zweiten Detektor 16 für die Reflexion weitergeleitet. Die zweite NIR-Strahlungsquelle 14 sowie die zweite Messoptik 15' für die Reflexion sind auf einer Seite der Aufnahmevorrichtung 4 angeordnet. Im Falle von Figur 2A ist die NIR-Strahlungsquelle 14 sowie die zweite Messoptik 15' unterhalb der Aufnahmevorrichtung 4 angebracht, wobei es auch denkbar ist, dass diese oberhalb der Aufnahmevorrichtung 4 angeordnet sind. Die Messstation 2 wird anschließend relativ zu der Aufnahmevorrichtung 4 bewegt, was durch die Pfeile 17, 17', 17" angedeutet ist. Ebenso wird die Messstation 3 relativ zu der Aufnahmevorrichtung 4 in Richtung der Pfeile 17, 17', 17" bewegt, wobei die beiden Messstationen 2, 3 bevorzugt synchron in die gleiche Richtung bewegt werden. Die beiden Messstationen 2, 3 können beispielsweise dadurch bewegbar angeordnet sein, indem sie auf einem entsprechenden 2/3-Achsen-Schienensystem (nicht gezeigt) angebracht sind. Synchron bewegbar bedeutet dabei, dass die beiden Messstationen 2, 3 mit der gleichen Geschwindigkeit und vorzugsweise auch in die gleiche Richtung bewegt werden. Möglich ist auch, dass diese unabhängig voneinander bewegbar sind. Denkbar ist jedoch auch, dass die beiden Messstationen 2, 3 fest in dem Messsystem 1 angeordnet sind und nur die Aufnahmevorrichtung 4 mit den darauf angeordneten Prüflingen 5 bis 10 in Richtung der Pfeile 17, 17', 17" bewegt wird. Dazu kann die Aufnahmevorrichtung 4 ebenfalls an einem 2/3-Achsen-Schienensystem (nicht dargestellt) angeordnet sein. Es versteht sich, dass die Relativbewegung auch in die zu den Pfeilen Pfeil 17, 17', 17" entgegengesetzte Richtung erfolgen kann.
Nach Bewegung der beiden Messstationen 2, 3 wird die in Figur 2B gezeigte Position erreicht. Dabei wird mit der Messstation 2 die Transmission des Prüflings 7 und mit der Messstation 3 die Reflexion des Prüflings 10 ermittelt. Bevor jedoch die Prüflinge 7 und 10 vermessen werden (Figur 2A), ist es auch möglich, dass die beiden Messstationen 2, 3 nur ein wenig in Richtung der Pfeile 17, 17', 17" bewegt werden, so dass die Transmission des Prüflings 6 an zumindest einer weiteren Stelle gemessen wird (sogenannte Mehrfachpunktmessung eines Prüflings). Entsprechend wird auch die Reflexion an zumindest einer weiteren Position des Prüflings 9 gemessen. Sind alle auf der Aufnahmevorrichtung 4 angeordneten Prüflinge 5 bis 10 vermessen worden, so können diese Prüflinge 5 bis 10 entfernt werden und weitere Prüflinge, deren Qualität und Wirkstoffgehalt ermittelt werden soll, auf die Aufnahmevorrichtung 4 aufgebracht werden. Die Werte für die Transmission sowie für die Reflexion werden an einen Rechner (nicht dargestellt), zum Beispiel an einen PC oder ein Embedded System, übermittelt. In diesem Rechner werden über die ermittelten Werte für die Transmission und für die Reflexion die Qualität der Prüflinge sowie deren Wirkstoffe bestimmt. Dies kann zum Beispiel mittels Chemometrik geschehen. Da sowohl Werte für die Reflexion als auch für die Transmission erhalten werden, kann die Qualität sowie die enthaltenen Wirkstoffe der Prüflinge sehr genau bestimmt werden.
Obwohl dies in den Figuren 2A und 2B nicht dargestellt ist, so können Blenden vorgesehen sein, mit denen die Strahlungsintensität der NIR-Strahlungsquellen 11, 14 eingestellt werden kann. Diese Blenden sind vorzugsweise direkt unterhalb der Aufnahmevorrichtung 4 angeordnet. Bei diesen Blenden kann es sich beispielsweise um Lochblenden oder Irisblenden handeln.

In Figur 2C ist eine Unterseite der Aufnahmevorrichtung 4 gezeigt (Blick Richtung A), auf der die Prüflinge 5 bis 10 angeordnet sind. Wie zu erkennen, sind die Prüflinge 5 bis 10 an verschiedenen Stellen der Aufnahmevorrichtung 4 angeordnet. Damit alle Prüflinge 5 bis 10 vermessen werden können, müssen die NIR-Strahlungsquelle 11 zusammen mit der Messoptik 13' sowie die NIR-Strahlungsquelle 14 zusammen mit der Messoptik 15' relativ zu der Aufnahmevorrichtung 4 bewegt werden. Dies ist nur möglich, wenn die Relativbewegung, entlang aller x-, y- und z-Achsen, d.h. in jeder der Richtungen 17, 17' und 17" erfolgt. Dabei wird ein bestimmter Messbereich abgefahren und vermessen (Scanning-Verfahren). Liegt in diesem Messbereich kein Prüfling, so wird ein ungültiges Messergebnis erhalten. Messwerte werden nur enthalten, wenn ein Prüfling in diesem Messbereich liegt und vermessen wird. Dabei können auch mehrere Punkte des Prüflings vermessen werden. Durch diese so genannte Mehrfachpunktmessung werden mehrere Messwerte für die Reflexion und für die Transmission eines Prüflings erhalten, wodurch über die ermittelten Einzelwerte und die Bildung von Mittelwerten stabile Messwerte erhalten werden, die ein optimales Trendmodell bzw. Spektrenmodell gewährleisten. Vorteilhaft ist, dass es sich um eine sehr schnelle Messtechnik handelt, wobei Fremdlicht und Streustrahlung ausgeschlossen werden können, indem der Messbereich beispielsweise durch eine Abdeckung oder ein Gehäuse (nicht gezeigt) abgedeckt wird. Da wenige mechanische Komponenten benötigt werden, läuft das Messsystem sehr stabil. Vorteilhaft ist ferner, dass fast alle Tablettenformen und Tablettendicken vermessen werden können.

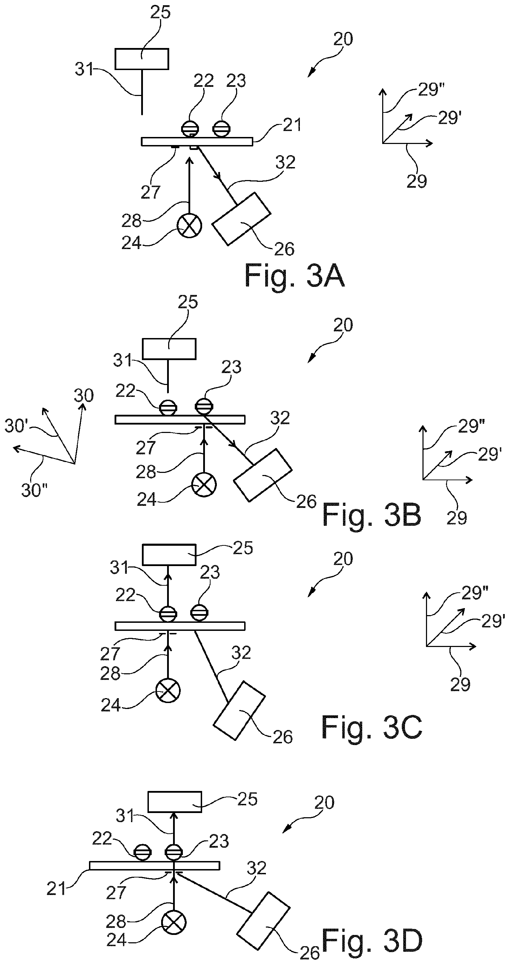

In den Figuren 3A bis 3D ist eine erste Variante eines Messsystems zur Qualitätsüberwachung sowie zur Wirkstoffbestimmung dargestellt. Das Messsystem 20 weist eine lichtdurchlässige Aufnahmevorrichtung 21 für mindestens einen Prüfling auf, wobei in der Figur 3A zwei Prüflinge 22, 23 auf der Aufnahmevorrichtung 21 aufliegen. Bevorzugt besteht diese Aufnahmevorrichtung 21 aus Quarzglas und ist als Quarzglasplatte ausgebildet. Die als Platte ausgebildet Aufnahmevorrichtung 21 kann aber auch aus Saphir, Infrasil® oder aus Suprasil® bestehen. Das Messsystem 20 umfasst ferner eine NIR-Strahlungsquelle 24 sowie eine erste Messoptik 31 sowie eine zweite Messoptik 32. Die erste Messoptik 31 ist mit einem Detektor 25 für die Transmission und die zweite Messoptik 32 mit dem Detektor 26 für Reflexion verbunden. Mit der ersten Messoptik 31 wird die aufgenommene NIR-Strahlung 28 an den ersten Detektor 25 für Transmission und mit der zweiten Messoptik 32 wird die aufgenommene NIR-Strahlung 28 an den zweiten Detektor 26 für Reflexion weitergeleitet.
Die Aufnahmevorrichtung 21 ist dabei zwischen der NIR-Strahlungsquelle 24 und der ersten Messoptik 31 angeordnet. Die NIR-Strahlungsquelle 24 sowie die zweite Messoptik 32 sind hingegen auf einer Seite der Aufnahmevorrichtung 21 angebracht. Unterhalb der Aufnahmevorrichtung 21 ist eine Blende 27, zum Beispiel eine Irisblende oder einer Lochblende, vorgesehen, mit der die Intensität der von der NIR-Strahlungsquelle 24 kommenden NIR-Strahlung 28 eingestellt werden kann. In Figur 3A wird gerade die Reflexion des Prüflings 22 gemessen, wobei die NIR-Strahlung 28 von der NIR-Strahlungsquelle 24 abgestrahlt wird, dann auf den Prüfling 22 trifft und anschließend reflektiert wird. Die reflektierte NIR-Strahlung trifft dabei unter einem bestimmten Winkel auf die zweite Messoptik 32, die dann zum Detektor 26 für Reflexion weiterleitet wird. Anschließend wird das Messsystem 20 relativ zur Aufnahmevorrichtung 21 zu einem anderen Messbereich geführt, was durch die Pfeile 29, 29', 29" angedeutet ist. Dabei können die beiden Messoptiken 31, 32 oder die Aufnahmevorrichtung 21 verfahrbar in dem Messsystem 20 angeordnet sein. Möglich ist auch, dass sowohl die beiden Messoptiken 31, 32 als auch die Aufnahmevorrichtung 21 verfahrbar sind. In diesem Fall können die Aufnahmevorrichtung 21 und auch die Messoptiken 31, 32 beispielsweise auf einem Schienensystem oder auf Rollen angeordnet sein (nicht gezeigt).
Die Relativbewegung kann somit in jede Richtung, d.h. entlang x-, y- und z-Achse durchgeführt werden, womit jeder Bereich der Aufnahmevorrichtung 21 abgefahren werden kann. Es können sodann die Messoptiken 31, 32 erneut relativ zu der Aufnahmevorrichtung 21 in Richtung des Pfeils 29 und/oder des Pfeils 29' und/oder des Pfeils 29" bewegt werden, so dass zumindest ein weiterer Punkt des Prüflings 22 vermessen wird (so genannte Mehrfachpunktmessung) oder es kann, wie in Figur 3B dargestellt, der Prüfling 23 vermessen werden. Auch mit dem Messsystem 20 ist somit möglich, ein Prüfling an mehreren Punkten zu vermessen, womit eine Mehrfachpunktmessung durchführbar ist. Die reflektierte Strahlung wird über die Messoptik 32 zum Detektor 26 übertragen, wo ein Wert für die Reflexion erhalten wird.
Anschließend wird die Messstation 20 relativ zu der Aufnahmevorrichtung 21 in die entgegengesetzte Richtung bewegt, was durch den Pfeil 30, 30', 30" angedeutet ist. Die NIR-Strahlung 28 der NIR -Strahlungsquelle 24 wird dabei in Richtung des Prüflings 22 abgestrahlt (Figur 3C). Die Strahlung, die durch den Prüfling 22 hindurch gelassen wird, wird von der Messoptik 31 erfasst und zum Detektor 25 weitergeleitet, wodurch ein Wert für die Transmission des Prüflings 22 erhalten wird. Anschließend wird das Messsystem 20 durch eine Relativbewegung wieder in Richtung der Pfeile 29, 29', 29" bewegt und es wird die Transmission des nächsten Prüflings 23 gemessen (Figur 3D). Die erhaltenen Werte für die Transmission sowie für die Reflexion werden an einen nicht dargestellten Rechner übermittelt. In diesem Rechner wird über die ermittelten Werte für die Transmission und für die Reflexion mittels Chemometrik die Qualität der Prüflinge 22, 23 sowie die in den Prüflingen 22, 23 enthaltenen Wirkstoffe bestimmt. Vorteilhaft bei diesem Messsystem 20 ist, dass durch die Mehrfachpunktmessung nicht nur die Wirkstoffe, sondern auch die Konzentration der Wirkstoffe in einem bestimmten Bereich der Prüflinge bestimmt werden können.

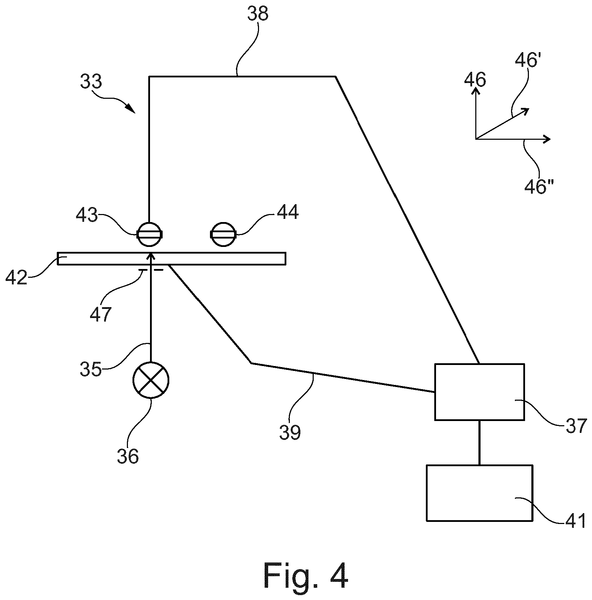

In Figur 4 ist eine zweite Variante eines Messsystems 33 zur Qualitätsüberwachung sowie zur Wirkstoffbestimmung von Prüflinger gemäß der vorliegenden Erfindung dargestellt. Dieses Messsystem 33 umfasst eine NIR-Strahlungsquelle 36, die auf einer Seite einer Aufnahmevorrichtung 42 angeordnet ist. Zwischen der Aufnahmevorrichtung 42 und der NIR-Strahlungsquelle 36 ist eine Blende 47, zum Beispiel eine Irisblende oder eine Lochblende, vorgesehen. Mit dieser Blende 47 kann die Intensität der von der Strahlungsquelle 36 kommenden NIR-Strahlung 35 eingestellt werden. Auf der Aufnahmevorrichtung 42 sind mehrere Prüflinge angeordnet, von denen nur zwei Prüflinge 43 und 44 dargestellt sind. Direkt oberhalb des Prüflings 43 ist eine erste Messoptik 38 und direkt unterhalb der Aufnahmevorrichtung 42 eine zweite Messoptik 39 vorgesehen. Die beiden Messoptiken 38, 39 sind mit einem optischen Multiplexer 37 verbunden. Auch bei diesen beiden Messoptiken 38, 39 kann es sich um Lichtfasern handeln. An den Multiplexer 37 schließt sich ein Detektor 41 für die Transmission als auch für die Reflexion an. Mit diesem Detektor 41 kann deshalb sowohl die Transmission als auch die Reflexion ermittelt werden. Mit dem optischen Multiplexer 37 ist es dabei möglich, zwischen der Messoptik 38 und der Messoptik 39 zu schalten, womit es möglich ist, in definierten Intervallen zuerst die Transmission und anschließend die Reflexion zu messen. Das Intervall kann dabei beispielsweise in Millisekunden- bis Sekundenbereich, z.B. 1,5 Millisekunden bis 2,5 Sekunden, sein. Wählt der Multiplexer 37 die Messoptik 38 an, so wird das von der Lichtquelle 36 kommende und vom Prüfling 43 durchgelassene Licht, von der Messoptik 38 erfasst und an den Multiplexer 37 geleitet, der dieses an den Detektor 41 weitergibt, wodurch ein Wert für die Transmission erhalten wird. Anschließend schaltet der Multiplexer 37 um und es wird die Messoptik 39 angesprochen. Diese Messoptik 39 erfasst das von dem Prüfling 43 reflektierte Licht und gibt das reflektierte Licht über den optischen Multiplexer 37 an den Detektor 41 weiter. Es wird somit ein Wert für die Reflexion erhalten.
Die beiden Messoptiken 38, 39, die NIR-Strahlungsquelle 36 sowie die Blende 47 bilden dabei eine Messeinheit, die relativ zu der Aufnahmevorrichtung 43 bewegbar angeordnet ist. Die Relativbewegung ist durch die Pfeile 46, 46', 46" angedeutet. Die Relativbewegung ist somit in die x-, y- bzw. die z-Achse möglich.
Durch diese Relativbewegung der Messeinheit können nicht nur mehrere Prüflinge nacheinander vermessen werden, sondern es ist auch möglich, dass ein Prüfling an unterschiedlichen Orten vermessen wird. Es wird so eine Vielzahl von Messwerten für die Transmission bzw. für die Reflexion des entsprechenden Prüflings erhalten.
Von Vorteil bei diesem Messsystem 33 ist, dass dieses sehr kompakt aufgebaut ist, weil nur eine NIR-Strahlungsquelle 36 benötigt wird.

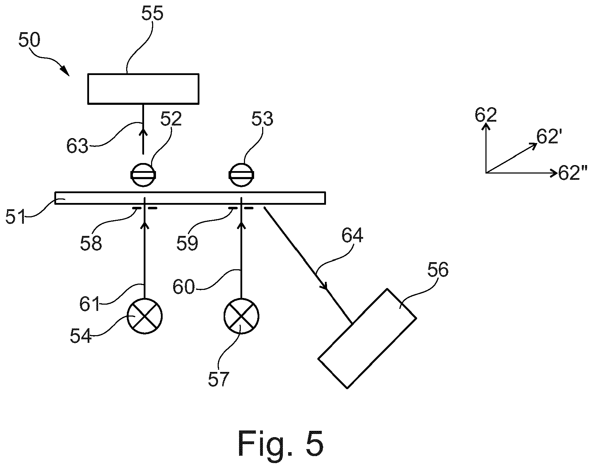

In Figur 5 ist eine dritte Variante eines Messsystems 50 zur Qualitätsüberwachung sowie zur Wirkstoffbestimmung von Prüflingen dargestellt. Auf einer aus Quarz, Infrasil®, Suprasil® oder Saphir bestehenden Aufnahmevorrichtung 51 für Prüflinge sind mehrere Prüflinge angeordnet, von denen nur zwei Prüflinge 52, 53 dargestellt sind. Die Aufnahmevorrichtung 51 ist zwischen einer ersten NIR-Strahlungsquelle 54 und dem ersten Detektor 55 für die Messung der Transmission angebracht. Zwischen den Prüfling 52 und dem Detektor 55 ist eine erste Messoptik 63 vorgesehen. Direkt vor der Aufnahmevorrichtung 51 kann eine Blende 58 vorgesehen sein, mit der die Intensität der von der NIR-Strahlungsquelle 54 kommenden Strahlung 61 veränderbar ist. Bei dieser Blende 58 kann es sich beispielsweise um eine Lochblende oder eine Irisblende handeln.
Bei diesem Messsystem 50 werden abwechselnd die Reflexion und die Transmission gemessen. Dazu wird einer der Detektoren 55 oder 56 ausgeschaltet und die entsprechende Lichtquelle 54 oder 57 deaktiviert. Dazu kann die entsprechende Lichtquelle entweder ausgeschaltet werden oder die Strahlung dieser Lichtquelle durch einen Shutter (nicht dargestellt) ausgeblendet werden. Soll beispielsweise die Transmission eines Prüflings gemessen werden, so werden der Detektor 56 für die Reflexion und die Lichtquelle 57 deaktiviert.
Im Folgenden Ausführungsbeispiel wird zuerst die Transmission des Prüflings 52 gemessen. Dazu wird der Detektor 56 und die Lichtquelle 57 deaktiviert. Die von der ersten NIR-Strahlungsquelle 54 kommende NIR-Strahlung 61 wird vom Prüfling 52 zumindest teilweise durchgelassen und von der ersten Messoptik 63, beispielsweise Lichtfasern, erfasst und an den Detektor 55 weitergeleitet und es wird die Transmission ermittelt.
Anschließend wird die Reflexion gemessen. Dazu weist das Messsystem 50 die zweite NIR-Strahlungsquelle 57 sowie eine zweite Messoptik 64 mit dem daran angeordneten zweiten Detektor 56 für die Messung der Reflexion auf, wobei die NIR-Strahlungsquelle 57 sowie die zweite Messoptik 64 auf einer Seite der Aufnahmevorrichtung 51 angeordnet sind. Vor der Aufnahmevorrichtung 51 kann zudem eine Blende 59, zum Beispiel eine Lochblende oder eine Irisblende, vorgesehen sein, mit der die Intensität der von der NIR-Strahlungsquelle 57 kommenden NIR-Strahlung 60 einstellbar ist. Die von der NIR-Strahlungsquelle 57 kommende NIR-Strahlung 60 trifft auf eine bestimmte Stelle des Prüflings 53 und wird zumindest teilweise reflektiert. Die reflektierte NIR-Strahlung wird von der zweiten Messoptik 64, zum Beispiel Lichtfasern, erfasst und wird zum zweiten Detektor 56 weitergeleitet. Aus der reflektierten Strahlung wird ein Wert für die Reflexion ermittelt. Anschließend werden die beiden NIR-Strahlungsquellen 54 und 57 mit den entsprechenden Blenden 58, 59 synchron mit den beiden Messoptiken 63, 64 relativ zu der Aufnahmevorrichtung 51 bewegt, was durch die Pfeile 62, 62' und 62" angedeutet ist. Deshalb kann auch eine Mehrfachpunktmessung durchgeführt werden, d.h. die Reflexion und die Transmission des Prüflings 52 bzw. des Prüflings 53 werden noch an weiteren Punkten vermessen. Es werden so für die Prüflinge 52, 53 mehrere Messwerte für die Reflexion und Transmission ermittelt, wodurch über die Bildung von Einzel- und Mittelwerten stabile Messwerte für die Reflexion bzw. die Transmission des Prüflings 52 erhalten werden. Durch die so erhaltenen Messwerte für die Reflexion und Transmission wird ein optimales Trendmodell bzw. Spektrenmodell für den Prüfling 52 bzw. für den Prüfling 53 erhalten. Nachdem die Mehrpunktmessungen an den Prüflingen 52, 53 durchgeführt wurden, können weitere Prüflinge (nicht gezeigt) vermessen werden.

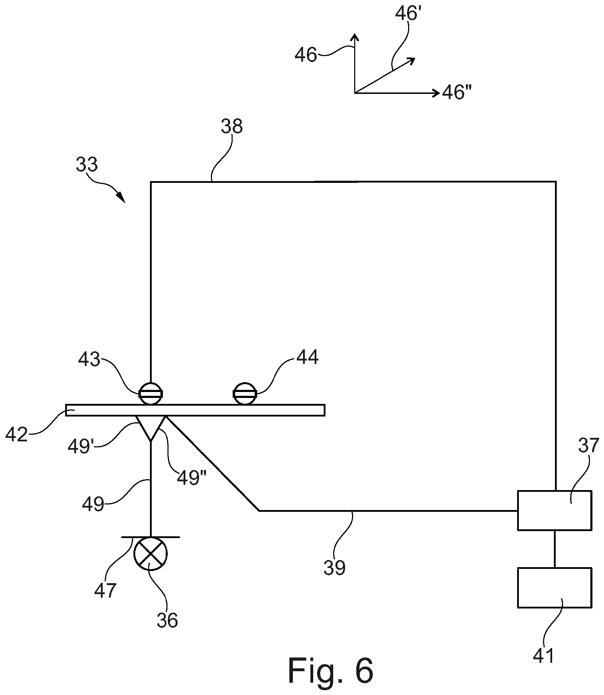

In Figur 6 ist eine vierte Variante eines Messsystems 50 zur Qualitätsüberwachung sowie zur Wirkstoffbestimmung von Prüflingen gemäß der vorliegenden Erfindung gezeigt. Diese Variante entspricht im Wesentlichen der in Figur 4 gezeigten Variante, weshalb viele Bezugszahlen beibehalten wurden. Gezeigt ist wiederum das Messsystem 33 mit einer Messeinheit bestehend aus den beiden Messoptiken 38, 39, der NIR-Strahlungsquelle 36 sowie der Blende 47, wobei die Messeinheit relativ zu der Aufnahmevorrichtung 42 bewegbar angeordnet ist. Die Relativbewegung ist durch die Pfeile 46, 46', 46" angedeutet. Auch die Relativbewegung in diesem Messsystem 33 ist somit in die x-, y- und z-Achse möglich. Auf der Aufnahmevorrichtung 42 sind wiederum zwei Prüflinge 43 und 44 angeordnet. Die beiden Messoptiken 38, 39 laufen zum optischen Multiplexer 37, der wiederum mit dem Detektor 41 verbunden ist.
Allerdings wird das Licht, d.h. die NIR-Strahlung, nicht direkt von der NIR-Strahlungsquelle 36 auf den Prüfling 43 gerichtet, sondern das Licht tritt durch eine Öffnung der Blende 47 hindurch und trifft auf eine Y-Faser 49, über die das Licht direkt vor die Aufnahmevorrichtung 42 gebracht wird. Dort tritt das Licht wieder aus der Faser 49 aus. Durch diese Y-Faser 49 kann der Prüfling 43 allerdings von zwei verschiedenen Stellen beleuchtet werden, da die Y-Faser 49 zwei Endbereiche 49' und 49" aufweist, aus denen Licht austreten kann. Obwohl in der Figur 6 nicht gezeigt, so kann zwischen den beiden Endbereichen 49' und 49" der Y-Faser 49 und der Aufnahmevorrichtung 42 noch jeweils eine Blende vorgesehen werden, mit der die Intensität der aus diesen Endbereichen 49' und 49" kommende Strahlung einstellbar ist. Vorteilhafterweise haben auch die Messoptiken 38 und 39 eine solche Y-Form (nicht gezeigt), d.h. sie besitzen ebenfalls zwei Endbereiche, damit die aus den Endbereichen 49' und 49" kommende Strahlung und von den Prüflingen durchgelassene bzw. reflektierte Strahlung direkt auf die Endbereiche der entsprechenden Messoptiken 38 bzw. 39 trifft und an den Multiplexer 37 weitergeleitet werden kann. Dadurch würden in einem kürzeren Zeitraum mehr Messwerte erhalten, wodurch eine größere Anzahl an Prüflingen in der gleichen Zeit vermessen werden könnten.
Es versteht sich, dass diese Y-Faser auch bei den anderen Varianten gemäß den Figuren 2 bis 5 eingesetzt werden kann, womit auch die Prüflinge in den anderen Messsystemen von zwei Seiten bestrahlt werden können. Dabei kann die entsprechende NIR-Strahlungsquelle oberhalb oder unterhalb der korrespondierenden Aufnahmevorrichtung angeordnet sein. Ist die Y-Faser oberhalb der Aufnahmevorrichtung angeordnet, so werden die Prüflinge direkt bestrahlt und es ist nicht unbedingt erforderlich, Blenden vor die Endbereiche der Y-Faser anzuordnen. Denkbar ist auch, dass eine Faser eingesetzt wird, die mehr als nur zwei Ausgänge hat, zum Beispiel drei oder vier Ausgänge, wodurch ein Prüfling an drei bzw. an vier verschiedenen Stellen gleichzeitig beleuchtet werden kann. Eine solche Faser oder Messoptik mit mehr als zwei Ausgängen ist jedoch in der Figur 6 nicht gezeigt.

### Bezugszeichenliste

- 1: Messsystem
- 2: Messstation
- 3: Messstation
- 4: Aufnahmevorrichtung
- 5: Prüfling
- 6: Prüfling
- 7: Prüfling
- 8: Prüfling
- 9: Prüfling
- 10: Prüfling
- 11: NIR-Strahlungsquelle
- 12: Erster Detektor
- 13: NIR-Strahlung
- 13': Erste Messoptik
- 14: NIR-Strahlungsquelle
- 15: NIR-Strahlung
- 15': Zweite Messoptik
- 16: Zweiter Detektor
- 17: Pfeil
- 17': Pfeil
- 17": Pfeil
- 18: Prüfsystem
- 19:
- 20: Messsystem
- 21: Aufnahmevorrichtung
- 22: Prüfling
- 23: Prüfling
- 24: NIR-Strahlungsquelle
- 25: Erster Detektor
- 26: Zweiter Detektor
- 27: Blende
- 28: NIR-Strahlung
- 29: Pfeil
- 29': Pfeil
- 29": Pfeil
- 30: Pfeil
- 30': Pfeil
- 30": Pfeil
- 31: Erste Messoptik
- 32: Zweite Messoptik
- 33: Messsystem
- 34:
- 35: NIR-Strahlung
- 36: NIR-Strahlungsquelle
- 37: Multiplexer
- 38: Erste Messoptik
- 39: Zweite Messoptik
- 40:
- 41: Detektor
- 42: Aufnahmevorrichtung
- 43: Prüfling
- 44: Prüfling
- 45:
- 46: Pfeil
- 46': Pfeil
- 46": Pfeil
- 47: Blende
- 48:
- 49: Y-Faser
- 49': Endbereich
- 49": Endbereich
- 50: Messsystem
- 51: Aufnahmevorrichtung
- 52: Prüfling
- 53: Prüfling
- 54: NIR-Strahlungsquelle
- 55: Erster Detektor
- 56: Zweiter Detektor
- 57: NIR-Strahlungsquelle
- 58: Blende
- 59: Blende
- 60: NIR-Strahlung
- 61: NIR-Strahlung
- 62': Pfeil
- 62': Pfeil
- 62": Pfeil
- 62:
- 63: Erste Messoptik
- 64: Zweite Messoptik
- 100: Prüfgerät
- 101: Bruchkammer
- 102: Festplatte
- 103: Pressbacke

## Patentansprüche

1. Messsystem (1, 20, 33, 50) zur Qualitätsüberwachung von Tabletten, umfassend mindestens eine lichtdurchlässige Aufnahmevorrichtung (4, 21, 42, 51) für die Aufnahme von zumindest einer Tablette (5 bis 10, 22, 23, 43, 44, 52, 53), mindestens eine NIR-Strahlungsquelle (11, 14, 24, 36, 54, 57) sowie mindestens einen Detektor (12, 16, 25, 26, 41, 55, 56) für Transmission und Reflexion, wobei eine erste Messoptik (13', 31, 38, 63) vorgesehen ist, mit der die von einer Tablette durchgelassene NIR-Strahlung aufnehmbar und an den mindestens einen Detektor (12, 25, 41, 55) weiterleitbar ist und eine zweite Messoptik (15', 32, 39, 64) vorgesehen ist, mit der die von einer Tablette reflektierte NIR-Strahlung aufnehmbar und an den mindestens einen Detektor (16, 41, 26, 56) weiterleitbar ist,
**dadurch gekennzeichnet, dass** ein optischer Multiplexer (37) vorgesehen ist, der mit der ersten Messoptik (38), der zweiten Messoptik (39) sowie dem Detektor (41) verbunden ist, wobei der Multiplexer (37) zwischen den beiden Messoptiken (38, 39) und dem Detektor (41) angeordnet ist.

2. Messsystem zur Qualitätsüberwachung von Tabletten nach Patentanspruch 1, **dadurch gekennzeichnet, dass** die erste Messoptik (13', 31, 38, 63) sowie die zweite Messoptik (15', 32, 39, 64) Lichtfasern sind.

3. Messsystem zur Qualitätsüberwachung von Tabletten nach Patentanspruch 1, **dadurch gekennzeichnet, dass** eine zweite NIR-Strahlungsquelle (14, 57) vorgesehen ist, wobei die zweite NIR-Strahlungsquelle (14, 57) zusammen mit der zweiten Messoptik (15', 64) auf einer Seite der lichtdurchlässigen Aufnahmevorrichtung (4, 51) angeordnet sind und wobei die lichtdurchlässige Aufnahmevorrichtung (4, 51) zwischen der ersten NIR-Strahlungsquelle (11, 54) und der ersten Messoptik (13', 63) angeordnet ist.

4. Messsystem zur Qualitätsüberwachung von Tabletten nach Patentanspruch 1, **dadurch gekennzeichnet, dass** die Aufnahmevorrichtung (4, 21, 42, 51) aus Quarzglas oder Saphir besteht.

## Claims

1. Measuring system (1, 20, 33, 50) for monitoring the quality of tablets, comprising at least one translucent receiving device (4, 21, 42, 51) for receiving at least one tablet (5 to 10, 22, 23, 43, 44, 52, 53), at least one NIR radiation source (11, 14, 24, 36, 54, 57) as well as at least one detector (12, 16, 25, 26, 41, 55, 56) for transmission and reflection, wherein a first measuring optics (13', 31, 38, 63) is provided with which the NIR radiation transmitted by a tablet can be absorbed and re-emitted to the a t least one detector (12, 25, 41, 55) and a second measuring optics (15', 32, 39, 64) is provided with which the NIR radiation reflected by a tablet can be absorbed and re-emitted to the at least one detector (16, 41, 26, 56),
**characterized in that**
an optical multiplexer (37) is provided that is connected to the first measuring optics (38), to the second measuring optics (39) as well as to the detector (41), wherein the multiplexer (37) is disposed between the two measuring optics (38, 39) and the detector (41).

2. Measuring system for monitoring the quality of tablets as in patent claim 1, **characterized in that**
the first measuring optics (13', 31, 38, 63) as well as the second measuring optics (15', 32, 39, 64) are optical fibers.

3. Measuring system for monitoring the quality of tablets as in patent claim 1, **characterized in that**
a second NIR radiation source (14, 57) is provided, wherein the second NIR radiation source (14, 57), together with the second measuring optics (15', 64), is disposed on one side of the translucent receiving device (4, 51) and wherein the translucent receiving device (4, 51) is disposed between the first NIR radiation source (11, 54) and the first measuring optics (13', 63).

4. Measuring system for monitoring the quality of tablets as in patent claim 1, **characterized in that**
the receiving device (4, 21, 42, 51) is comprised of fused quartz or sapphire.

## Revendications

1. Système de mesure (1, 20, 33, 50) destiné au contrôle qualité de comprimés, comprenant au moins un dispositif de prise de vue à transmission de lumière (4, 21, 42, 51), destiné à capturer au moins un comprimé (5 à 10, 22, 23, 43, 44, 52, 53), au moins une source de rayonnement NIR (11, 14, 24, 36, 54, 57) ainsi qu'au moins un détecteur (12, 16, 25, 26, 41, 55, 56) pour la transmission et la réflexion, dans lequel un premier système optique de mesure (13', 31, 38, 63) est prévu qui permet de capturer le rayonnement NIR transmis par un comprimé et de le retransmettre audit au moins un détecteur (12, 25, 41, 55), et un deuxième système optique de mesure (15', 32, 39, 64) est prévu qui permet de capturer le rayonnement NIR réfléchi par un comprimé et de le retransmettre audit au moins un détecteur (16, 41, 26, 56),
**caractérisé en ce qu'**un multiplexeur optique (37) est prévu qui est relié au premier système optique de mesure (38), au deuxième système optique de mesure (39) ainsi qu'au détecteur (41), le multiplexeur (37) étant disposé entre les deux systèmes optiques de mesure (38, 39) et le détecteur (41).

2. Système de mesure destiné au contrôle qualité de comprimés selon la revendication 1, **caractérisé en ce que** le premier système optique de mesure (13', 31, 38, 63) ainsi que le deuxième système optique de mesure (15', 32, 39, 64) sont des fibres optiques.

3. Système de mesure destiné au contrôle qualité de comprimés selon la revendication 1, **caractérisé en ce qu'**une deuxième source de rayonnement NIR (14, 57) est prévue, la deuxième source de rayonnement NIR (14, 57) étant disposée conjointement avec le deuxième système optique de mesure (15', 64) sur un côté du dispositif de prise de vue à transmission de lumière (4, 51), et le dispositif de prise de vue à transmission de lumière (4, 51) étant disposé entre la première source de rayonnement NIR(11, 54) et le premier système optique de mesure (13', 63).

4. Système de mesure destiné au contrôle qualité de comprimés selon la revendication 1, **caractérisé en ce que** le dispositif de prise de vue à transmission de lumière (4, 21, 42, 51) est composé de verre de quartz ou de saphir.
